# EUROPEAN PATENT SPECIFICATION

(11) **EP 2 911 127 B1**
(45) Date of publication and mention of the grant of the patent: **20.10.2021**
(21) Application number: 13847296.4
(22) Date of filing: 26.09.2013
(51) Int. Cl.: G08B 13/19, G08B 13/181

(54) **INTRUSION DETECTION DEVICE**
EINDRINGUNGSERKENNUNGSVORRICHTUNG
DISPOSITIF DE DÉTECTION D'INTRUSION

(30) Priority: 19.10.2012 JP 2012232272
(43) Date of publication of application: 26.08.2015
(73) Proprietor: Optex Co., Ltd., Shiga 520-0101 (JP)
(72) Inventor: KONDO, Takashi, Otsu-shi Shiga 520-0101 (JP); TOMOOKA, Hiroyuki, Otsu-shi Shiga 520-0101 (JP); NOGUCHI, Michinori, Otsu-shi Shiga 520-0101 (JP)
(74) Representative: Mewburn Ellis LLP
(86) International application number: PCT/JP2013/075971
(87) International publication number: WO 2014/061412

(56) References cited:
- EP-A1- 1 587 040
- JP-A- H09 101 376
- JP-A- 2001 124 866
- JP-A- 2003 014 539
- JP-A- 2005 201 754
- JP-A- 2006 018 750
- JP-A- 2008 224 529

## Description

### BACKGROUND OF THE INVENTION

### (Field of the Invention)

The present invention relates to an intrusion detection device for detecting the presence or absence of an object such as, for example, a human body intruding upon a direction variable warning area.

### Description of Related Art

As this kind of standard detecting sensor, a passive infrared ray (PIR) sensor and an active infrared ray (AIR) sensor have been known, which are each comprised of an optical section, including a detecting element for detecting the presence or absence of an object within a warning area, and a light collection section such as, for example, a lens.

One example of this intrusion detection device is known in which the warning area having a plurality of fractioned narrow areas or narrow width areas extending from a position proximate to the device to a position distant therefrom is defined by the optical section and the light collection section. In this respect, see, for example, the patent document 1 listed below.

Patent Document 1: JP Laid-open Patent Publication No. H11-086154

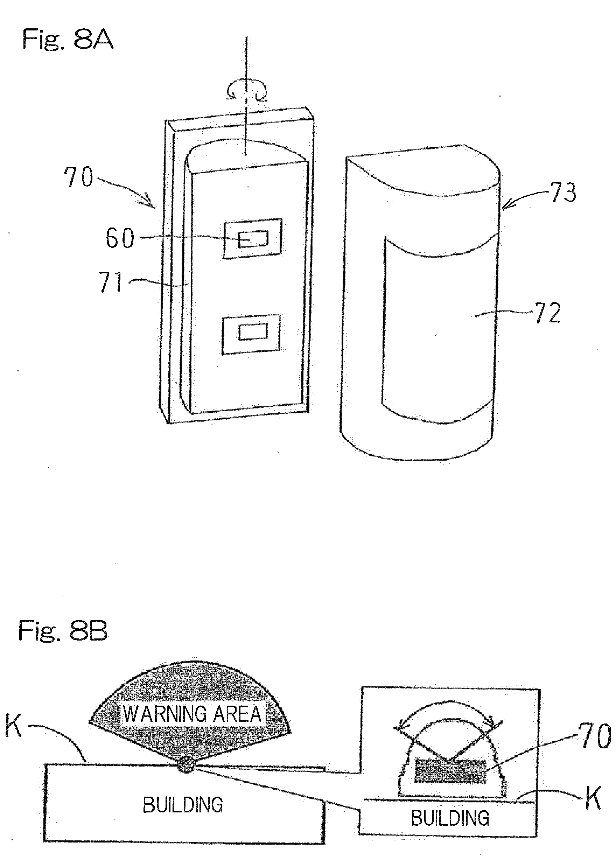

In the meantime, it is often desired that the direction of the warning area watched by the intrusion detection device be altered. As shown in Fig. 8A, the intrusion detection device 70 is equipped with a covering 73 in which a lens (a light collection section) 72 is provided in the optical section 71 having, for example, a detecting element 60 and the detecting element 60 is disposed for horizontal pivot within the optical section 71 so that the direction of the warning area is variable by such horizontal pivot. In this case, if the warning area is in a direction not oriented towards a wall K of a building as shown in Fig. 8B, no particular problem arise in operation.

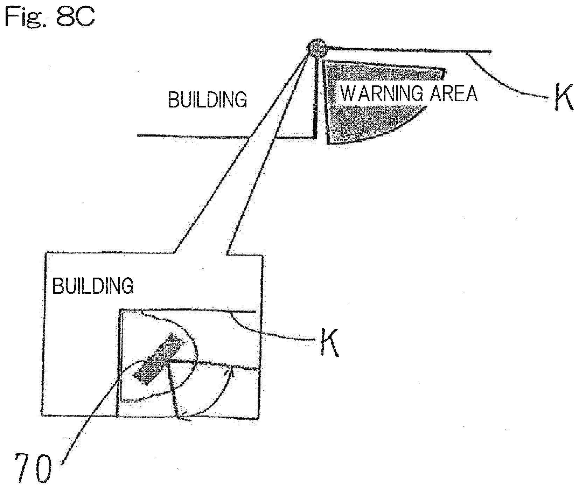

It has, however, been found that where the warning area is varied so as to encompass the direction oriented towards a wall surface of the wall K as shown in Fig. 8C, a factor will arise that leads to an erroneous operation as a result of the wall surface itself and/or the change of, for example, temperature. In other words, in the case of the erroneous operation that may occur unlikely as shown in Fig. 8B, the wide warning area is desirable to secure the detecting performance, but in the case of the erroneous operation that may occur likely as shown in Fig. 8C, a relatively narrow warning area is desirable to secure both of the warning area and the prevention of the erroneous operation simultaneously. In the past, pasting of a seal to an area corresponding portion, for example, the position of a lens 72 has been required so that an area liable to the erroneous operation can be eliminated and the position at which the seal is pasted tends to vary depending on a worker, resulting in a substantial amount of labors.

EP1587040 discloses a detector mountable on either a planar wall or an interior corner and having an adjustable field of view. The detector includes first and second sensors positioned to provide a horizontal field of view defining an angle of approximately 180 degrees. At least one blinder has a first position wherein the first and second sensors have a horizontal field of view defining an angle of approximately 180 degrees and a second position wherein the first and second sensors have a horizontal field of view defining an angle of approximately 90 degrees. A biasing member biases the blinder toward a first one of the first and second positions. A positioning member has a first member position wherein the positioning member biases the blinder toward the other of the first and second positions and a second member position wherein the biasing member biases the blinder into the first one of the first and second positions.

JP2008224529 discloses a monitoring device that is equipped with a fixing member installed on a position facing to a rotator, for locking the rotator by being interlocked with the rotator and fixing the rotator to a device body; a locking member fitted and mounted on a body case, for locking and fixing the rotator to the fixing member, having an insertion hole insertable by a special key used when adjusting the position of a domain monitoring part; and an energizing means inserted between the rotator and the fixing member, for energizing the fixing member and the locking member in the releasing direction of locking between the rotator and the fixing member when the special key is inserted into the insertion hole.

### SUMMARY OF THE INVENTION

In view of the foregoing, the present invention has for its essential object to provide an intrusion detection device of a type in which the securement of the warning area and the prevention of the erroneous operation can be simultaneously secured by easily and automatically setting a warning area, of which direction is variable, to a desired area depending on a condition thereof.

In order to accomplish the foregoing object of the present invention, according to the present invention there is provided an intrusion detection device according to claim 1.

According to the present invention, since the position of the area adjusting unit is set by its engagement with the position setting unit, the warning area can be automatically and easily set by an optical adjustment of the area adjusting unit to a desired area in dependence on the direction desired to be watched, the securement of the warning area and the prevention of the erroneous operation can be concurrently accomplished.

Furthermore, in the present invention, the narrow width area can be easily set to a desired area because of the optical adjustment performed by the area adjusting unit.

Furthermore, in the present invention, merely by engaging the variable shutter and the position setting rib with each other, the optical path of at least one of the narrow width areas can be optically blocked to enable the desired area to be automatically set with a simplified structure.

Furthermore, according to the present invention, the warning area can be easily and automatically set to the desired area with a simplified structure.

In a still further preferred embodiment of the present invention, the position setting rib referred to above may include a plurality of grooves juxtaposed in a direction conforming to the direction of pivot of the main unit, each of the groove having a different shape effective to retain a shutter position in correspondence with the position of pivot, and the variable shutter is of a generally L-shaped configuration including a shutter piece to block the optical path, formed by the narrow width areas, and an extension piece partially extending from the shutter piece and engageable in the groove of the position setting rib to define the position thereof. This structural features permits the variable shutter to be controlled outside a lens effective range and, therefore, without the lens efficiency being lowered, the warning area can be set to the desired area.

Also, so that a desired area region may be formed in correspondence with the setting of the angle of pivot of the optical section, it is preferred to include an area configuration in which an area in a direction forwardly with respect to a device front surface is offset leftwards and rightwards. Therefore, the warning area can be easily set to the desired area by arrangement of the plurality of the lenses.

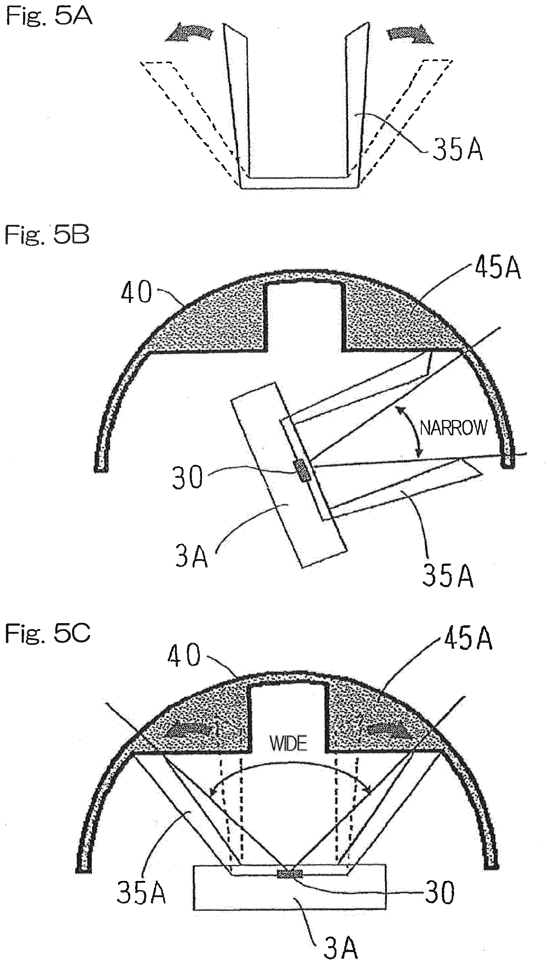

In a yet further preferred embodiment of the present invention, as shown in Figs. 5A to 5C, the variable shutter may be made of a deformable material, the angle of opening of the variable shutter being varied by the interference with the position setting rib having a predetermined rugged shape such that, in dependence on the angle of pivot of the optical section, it is set to a wide area having a large number of the narrow width areas or a narrow area having a small number thereof. Therefore, the warning area can be easily set to one of the wide area and the narrow area.

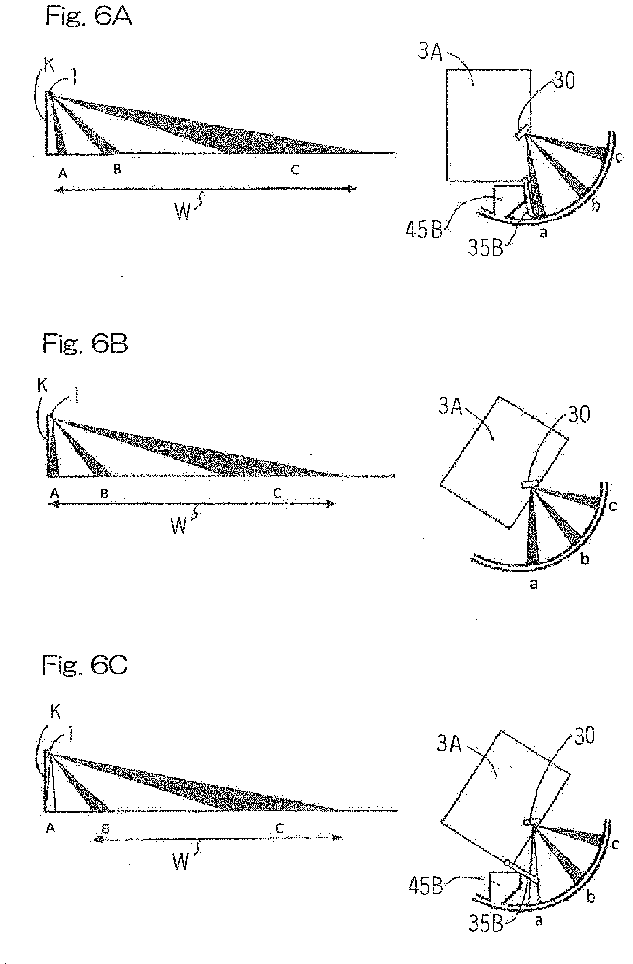

In a still yet further preferred embodiment of the present invention, as shown in Figs. 6A to 6C, the narrow width areas of the warning area may be formed in a plurality of number from a side adjacent to a device to a distant side in a vertically slantwise direction, the variable shutter and the position setting rib being engaged with each other, when adjustment to bring the entire of the narrow width areas to the side adjacent the device is to be performed, to thereby block the optical path of at least one of the narrow width areas. Therefore, in the event of the likeliness to occur the narrow width area highly liable to the erroneous operation incident to the adjustment of bringing the warning area towards the adjacent side (the side adjacent the wall surface), elimination of such narrow width area is effective to allow the adjustment to bring the warning area to the side adjacent the device and the reduction of the risk of the erroneous operation can be concurrently achieved.

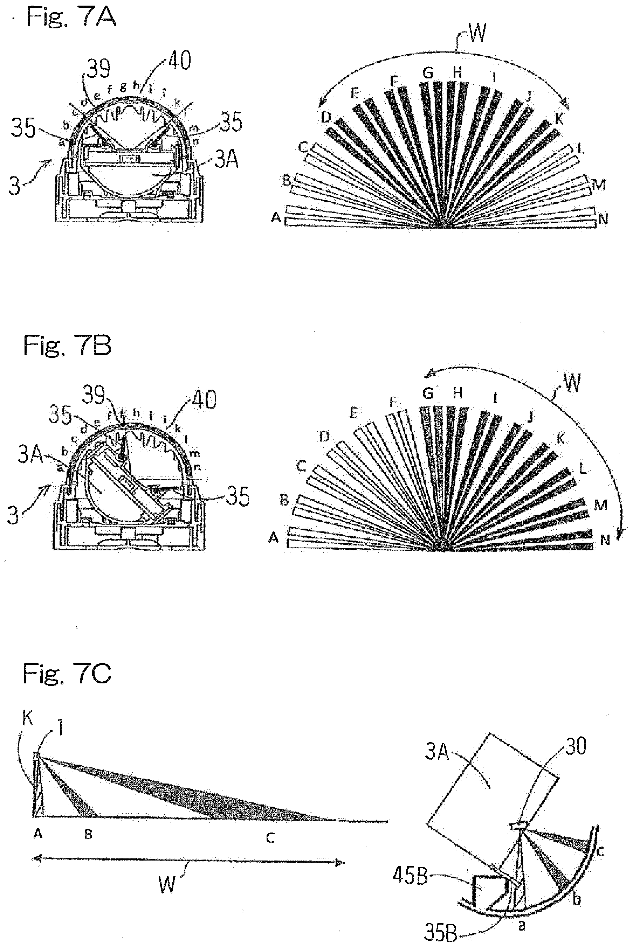

In a still yet further preferred embodiment of the present invention, as shown in Figs. 7A to 7C, by means of the variable shutter, a portion of the warning area may be adjusted in sensitivity by blocking a portion of the optical path, forming the narrow width area. Therefore, without changing the number of the narrow width areas, the sensitivity of the particular narrow width area can be adjusted.

In particular, any combination of two or more of the appended claims should be equally construed as included within the scope of the present invention.

### BRIEF DESCRIPTION OF THE DRAWINGS

The present invention will readily and clearly be understood from the following detailed description herein set forth in connection with a preferred embodiment thereof and its modifications with reference to the accompanying drawings. It is, however, to be noted that the preferred embodiment of the present invention and its modifications herein set forth and the accompanying drawings showing such preferred embodiment and modifications are only for the purpose of illustration and should not be used to limit the scope of the present invention in any way whatsoever. The scope of the present invention are to be understood as defined by the appended claims. In the accompanying drawings, like component parts shown in the accompanying drawings are designated by like reference numerals throughout the several views thereof, and:
Fig. 1 is a schematic perspective view showing one example of an intrusion detection device designed in accordance with a preferred embodiment of the present invention;
Figs. 2A to 2D are exploded views of the intrusion detection device shown in Fig. 1;
Figs. 3A and 3B are front elevational views showing the manner of pivoting an optical section;
Figs. 3C and 3D are cross sectional views taken along the line C-C in Fig. 3A and along the line D-D in Fig. 3B, respectively;
Figs. 4A and 4B are cross sectional views taken along the line IV-IV in Fig. 1;
Figs. 4C and 4D are top plan views showing a warning area having a plurality of narrow width areas;
Figs. 5A to 5C are explanatory diagrams showing a modified form of the intrusion detection device;
Figs. 6A to 6C are explanatory diagrams showing another modified form of the intrusion detection device;
Figs. 7A to 7C are explanatory diagrams showing a further modified form of the intrusion detection device; and
Figs. 8A to 8C are explanatory diagram showing the conventional intrusion detection device.

### DESCRIPTION OF PREFERRED EMBODIMENTS

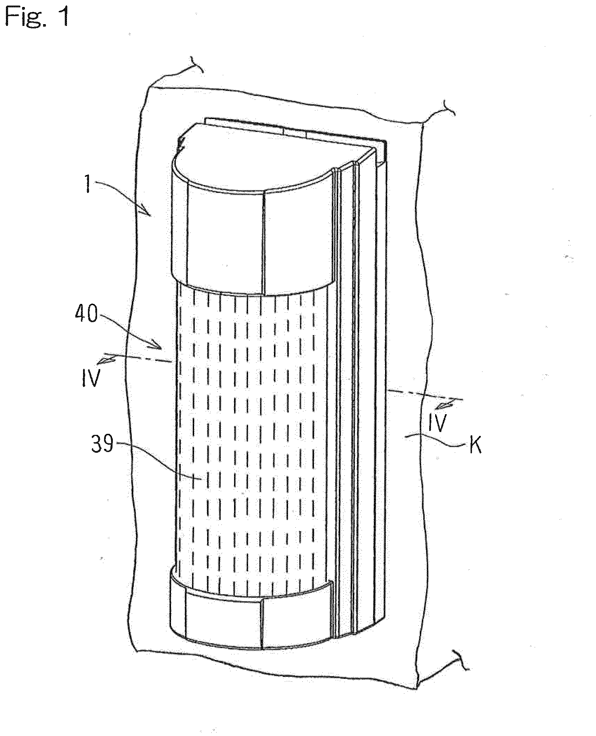

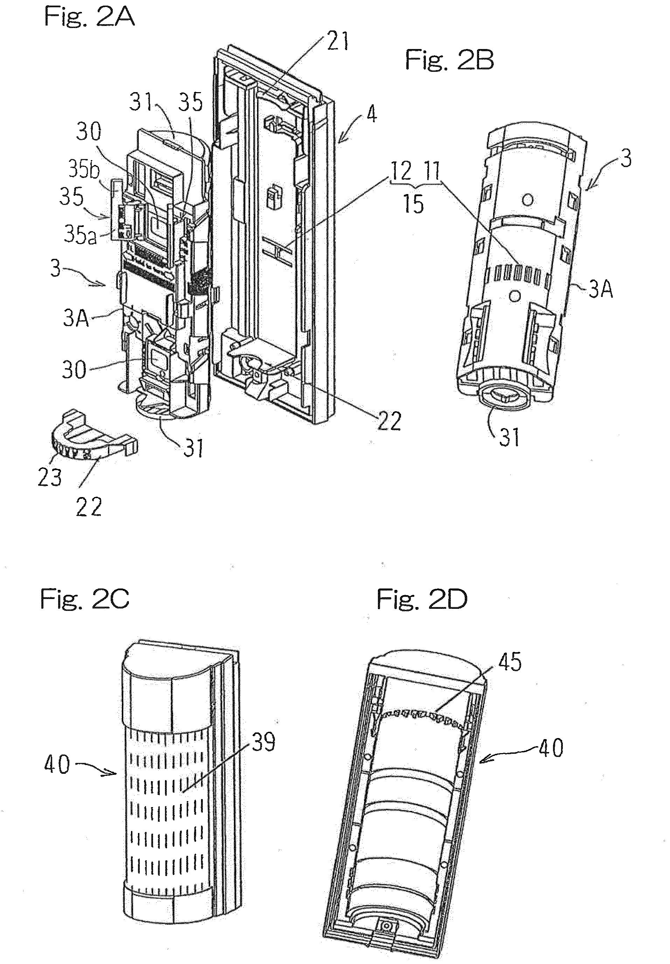

Preferred embodiments of the present invention will be hereinafter described in detail with reference to the accompanying drawings. In particular, Fig. 1 illustrates a perspective view showing on example of an intrusion detection device designed in accordance with a preferred embodiment of the present invention and Figs. 2A to 2D illustrate respective exploded views of such intrusion detection device shown in Fig. 1. As shown in Fig. 1, the intrusion detection device 1 is fitted to a wall K or a pillar by means of mounting members such as, for example, bolts not shown.

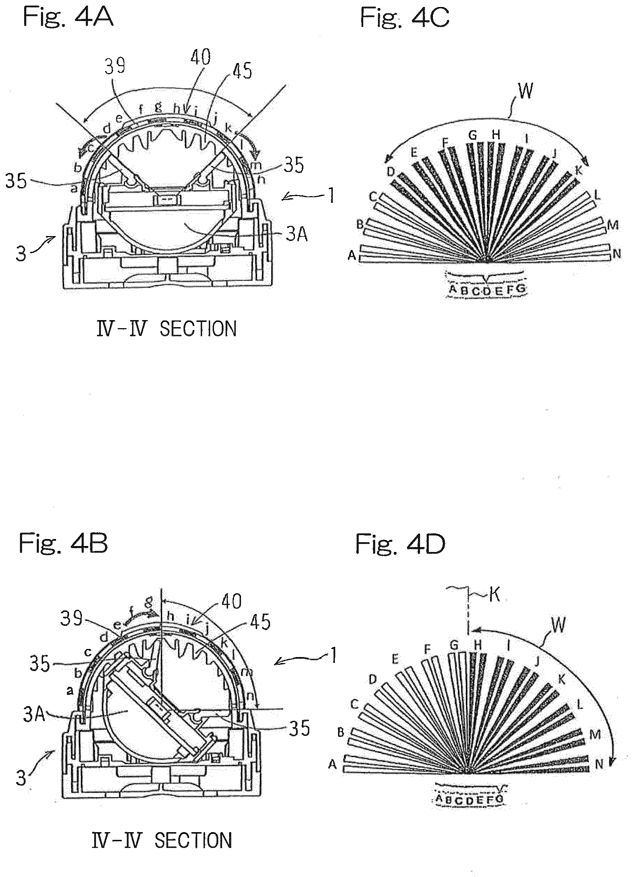

The illustrated intrusion detection device 1 is so constructed as to operate under, for example, a passive infrared ray (PIR) sensor and, although not shown, a control panel for controlling the intrusion detection device in its entirety is provided indoor. A microcomputer mounted on a control substrate within the intrusion detection device 1 is so designed and so configured as to control in such a manner that when a detecting element 30, best shown in Figs. 2A to 2D, detect far infrared rays emitted from an object such as, for example, a human body then illegally intruding within a warning area W best shown in Figs. 4A to 4D, and in the event that an electric signal descriptive of the amount of light received by the detecting element 30 attains a value higher than a predetermined level, a human body detection signal is generated to output a warning signal which is subsequently inputted to the control panel that is installed indoor.

The warning area W is defined by an optical section 3, which includes the detecting element 30 in the intrusion detection device 1 shown in Fig. 2A, and a light collecting section such as, for example, a segmentalized lens 39 shown in Fig. 2C. The optical section 3 shown in Fig. 2A includes a main unit 3A, having the detecting element 30, and a unit holder 4 for pivotally supporting the main unit 3A. In the illustrated instance, it includes a structure for varying the direction of the warning area W, which is embodied by pivoting the main unit 3A of the optical section 3 horizontally and fixing the segmentalized lens 39 provided in a covering 40 mounted on the optical section 3.

As shown in Fig. 2A, two PIR sensors 30 and 30, each being a detecting element, are provided at, for example, upper and lower locations of the main units 3A. The unit holder 4 has the lens equipped covering 40 mounted thereon, which covering 40 has its front surface formed integrally with an array of segmentalized lenses 39, which array is, for example, a Fresnel lens. The warning area W is made up of a plurality of narrow width areas fractioned by the segmentalized lenses 39. It is to be noted that the use may be made of the segmentalized lenses 39 separate from the covering 40 or a mirror or the like, for example, may be employed in place of the segmentalized lenses 39.

A pivoting structure in the optical section 3 will now be described. As shown in Fig. 2A, the main unit 3A has its rear surface side representing a split columnar shape and the entirety thereof is supported by the unit holder 4 for movement in a horizontal plane about a common axis defined by pivot shafts 31. As shown in Fig. 2B, the rear surface side of the main unit 3A is provided with a circumferentially deployed row of guide groove parts 11 and a center part of the unit holder 4 is provided with a projection 12. The guide groove parts 11 in the main unit 3A and the projection 12 cooperate with each other to define an angle retention part 15. When the main unit 3A is moved by hand in a horizontal direction to allow the projection 12 to be engaged in a selected one of the guide groove parts 11, the main unit 3A can be retained at an arbitrarily chosen horizontal pivot angle.

As shown in Fig. 2A, pivot bearings 21 and 22 are provided for supporting the main unit 3A, which is capable of pivoting about the common axis of the pivot shafts 31, at upper and lower portions of the unit holder 4, and a display part 23 for displaying the pivot angle of the main unit 3A is provided in a front side of the lower pivot bearing 22.

In the following description, a structure for automatically defining the warning area W for avoiding an erroneous operation will be described. The intrusion detection device 1 now under discussion is provided with an area adjusting unit 35 provided in either one of the optical section 3 and the segmentalized lenses 39, which are the light collecting section, for optically adjusting the optical path between the sections 3 and 39, which define the narrow width areas of the warning area W, and a position setting unit 45 provided in the other of the optical section 3 and the segmentalized lenses 39 and engageable with the area adjusting unit 35 to set the position thereof. For example, the area adjusting unit is a variable shutter 35 for blocking (light shielding) the optical path forming at least one of the narrow width areas and the position setting unit is a position setting rib 45 for performing a position setting in engagement with the variable shutter 35.

As shown in Fig. 2A, a pair of left and right variable shutters 35 and 35 are each so shaped as to represent a generally L-shaped configuration including a shutter piece 35a for blocking the narrow width area and an extension piece 35b extending from a portion of the shutter piece 35a, and the extension piece 35b is engaged in a groove defined in the position setting rib 45, as will be detailed later, to set the position thereof. Also, the variable shutter 35 is provided for somewhat rocking motion in a horizontal (leftward and rightward) direction, has a generally L-shaped shape with its color difficult to view through a lens, for example, a transparent color and is provided on both sides of the detecting element 30 for horizontal pivotal movement. This variable shutter 35 has the extension piece 35b in an upper portion thereof, which is engageable with the position setting rib 45 and also has the shutter piece 35a in a lower portion thereof, which originally functions as a shutter. In the instance as shown, of the upper and lower detection elements 30, only the upper detection element 30 is provided with the variable shutter 35.

It is to be noted that the variable shutter may be provided in both of the upper and lower detection elements 30 or only in the lower detection element 30. In addition, by changing the horizontal variable range of the variable shutter, the wideness and narrowness (i.e., the range) of the warning area W can be adjusted.

On the other hand, as shown in Fig. 2D, the position setting rib (cam) 45 having a plurality of recessed parts (grooves) deployed in a row conforming to the direction of pivot of the main unit 3A is detachably fixed on the covering 40. This position setting rib 45 has a recessed shape which is different depending on the angle of pivot of the variable shutter 35, and the recessed part of the position setting rib 45 and the extension piece 35b at the upper portion of the L-shaped variable shutter 35 are engageable with each other. The extension piece 35b referred to above is provided at a location out of the lens effective range of the covering 40 and is capable of changing the warning area W without lowering the lens efficiency.

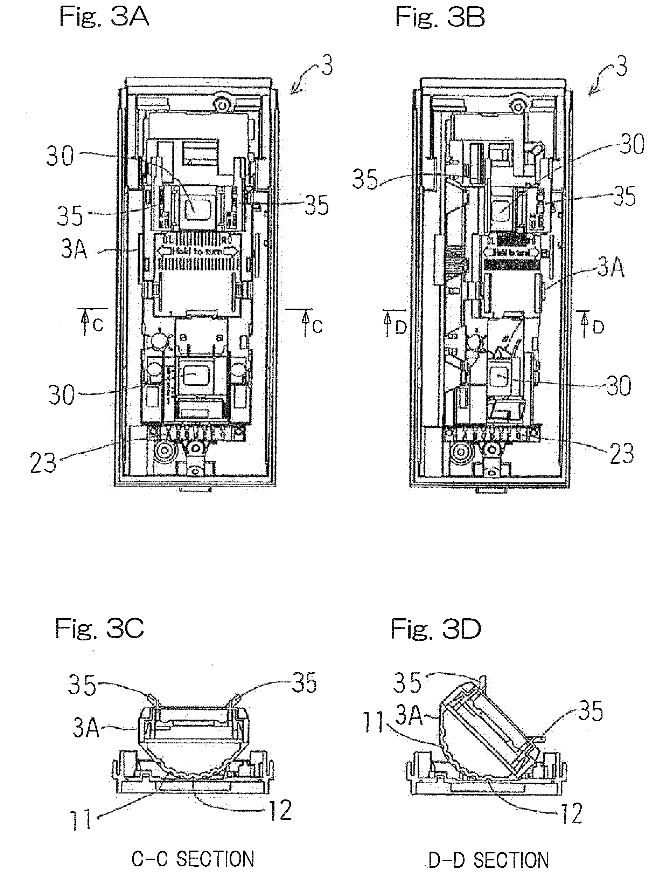

The position of the variable shutter 35 changed in response to the pivotal movement of the main unit 3A of the optical section 3. Fig. 3A illustrates a front elevational view when the main unit 3A is held at a particular angle of pivot, which is, for example, zero degree, and the detecting element 30 is oriented in a forward direction and Fig. 3C illustrates the cross sectional view taken along the line C-C in Fig. 3A, whereas Fig. 3B illustrates a front elevational view when the main unit 3A is tilted at the angle of pivot, which is about 45° and Fig. 3D illustrates the cross sectional view taken along the line D-D in Fig. 3B.

As shown in Figs. 4C and 4D, the warning area W is, as a whole, comprised of a plurality of narrow width areas A to N laid in the horizontal direction in correspondence with a plurality of fractioned lenses a to n, which the narrow width areas can be variably set one at a time. Fig. 4A illustrates a cross sectional view taken along the line IV-IV in Fig. 1, showing a condition in which the variable shutter 35 in the case of Fig. 3A and the position setting rib 45 of the covering 40 are engaged with each other. By the variable shutter 35 shown in Fig. 4A, the warning area W comprised of the narrow width areas D to K are formed, as shown in Fig. 4C, against, for example, the lenses d to k. The angle of pivot of the previously described display part 23 indicates the position D. Also, Fig. 4B illustrates a cross sectional view taken along the line IV-IV in Fig. 1, showing a condition of the Fig. 3B. By the variable shutter 35 shown in Fig. 4B, the warning area W comprised of the narrow width areas H to N is formed, as shown in Fig. 4D, against, for example, the lenses h to n. The angle of pivot of the display part 23 indicates the position G.

Each of the recessed parts in the position setting rib 45 has a varying shape and has at least one inner surface shape so that, in dependence with the angle of pivot of the main unit 3A, the variable shutter 35 can be positioned within each of the recessed parts. The variable shutter 35 is positioned by, for example, an inner side surface shape of the recessed part in the position setting rib 45 as shown in Figs. 4A and 4B while being somewhat oscillated (loosely engaged) leftward and rightward. At the pivot position of the main unit 3A, by the selective opening and closure of the covering 40, the variable shutter 33, with which the position setting rib 45 fixed to the covering 40 is engaged, undergoes a somewhat change of its angle leftwards or rightwards such that it is forcibly guided to a position of the particular recessed part in the position setting rib 45.

In the warning area W shown in Fig. 4C, since there is no erroneous operation resulting from the contact with the wall K, the large region in excess of 90° is formed with, for example, the eight narrow width areas D to K. In contrast thereto, in the warning area W shown in Fig. 4D, since the contact with the wall K occurs at an end portion, a narrow range of not greater than 90° is formed with the seven narrow width areas H to N with one narrow width area G at the end portion eliminated.

In this case, so that a desired area range can be obtained in dependence on the setting of the angle of pivot of the main unit 3A, an area configuration is established by the arrangement of the plurality of the lenses in which areas in the forward direction has its left and right areas offset with respect to a device front surface. In this example, the narrow width areas G and H are offset by the lenses g and h for a predetermined angle (for example, ± 5 to 10°) leftwards and rightwards with respect to the sensor front surface. In other words, as shown in Fig. 4D, the narrow width areas G and H are offset so that, when the main unit 3A is pivoted 45° rightwards, the narrow width area H will not break over the wall surface K. If no offset takes place, since an area is formed intermediate between the narrow width areas G and H (device front surface), the narrow width area in front of the device front surface will break over the wall surface K when the main unit 3A is pivoted. For the sake of the prevention of the erroneous operation, if the narrow width area in front of the device front surface is eliminated, the very narrow warning area of less than 90° will appear, with the area adjacent the wall disappearing, resulting a problem of failure to watch the warning area.

In view of the foregoing, in the offset area configuration, when the main unit 3A is in a condition having been pivoted, for example, 45° in the rightward direction, the narrow width area G is eliminated and a somewhat narrow desired warning area W, which is somewhat narrower than 90°, of the narrow width areas H to N, is formed. At this time, the variable shutter 35 is engaged with the position setting rib 45, as shown in Fig. 4B, to thereby block the optical path of the lens g. It is to be noted that, in a condition in which the main unit 3A is pivoted 45° in the leftward direction converse to that described above, the narrow width area H is eliminated. As discussed above, in dependence on the position to which the main unit 3A is pivoted, the desired warning area W can be adjustable.

By combining the area offset of this warning area W and the structure to automatically set the area together, the warning area can be easily set to the desired area in dependence on the condition of disposition of the intrusion detection device 1, as shown in Figs. 8B and 8C, in a building. Even though, as shown in Fig. 8C, the warning area of the intrusion detection device 1 is so changed as to encompass the direction in which it contacts the wall surface of the wall K, the warning area W can be adjusted so that no erroneous operation may occur, by eliminating the narrow width area liable to the erroneous operation by means of the variable shutter 35. In this way, the securement of the detecting performance and the reduction of the risk of the occurrence of the erroneous operation can be easily realized simultaneously.

Figs. 5A to 5C illustrate a first modification. As shown in Fig. 5A, in this modification, the variable shutter 35A has such a shape as shown by the solid line and is made of a material, which has an elasticity enough to permit the shutter 35A to expand in arrow headed directions, such as, for example, nylon. As shown in Fig. 5B, the position setting rib 45A provided in the covering 40 has a rugged shape defined by a recess at, for example, an intermediate portion and a projection on both side portions. This variable shutter 35A is of a type variable in angle of opening as a result of interference with the position setting rib 45A and, in dependence on the angle of pivot of the main unit 3A, a wide area having a large number of the narrow width areas and a narrow area having a small number of the narrow width area can be set one at a time. Other structural features than those described above are similar to those shown and described in connection with the previously described first embodiment of the present invention.

If there is no interference between the variable shutter 35A and the position setting rib 45A as shown in Fig. 5B, the variable shutter 35A is set to a narrow angle with the narrow area formed consequently. On the other hand, if interference takes place between the variable shutter 35A and the position setting rib 45A as shown in Fig. 5C, the variable shutter 35A is expanded and is therefore set to a large angle with the wide area formed consequently. Thus, the warning area W can be easily set to one of the wide area and the narrow area.

A second modification of the embodiment of the present invention is shown in Figs. 6A to 6C. In each of the foregoing examples, it has been shown and described that the main unit 3A has been pivoted in the horizontal direction to allow the movable shutter to engage with the position setting rib so that optical paths of the horizontally oriented narrow width areas may be blocked. In general, the narrow width areas of the warning area W has optical paths spreading in the horizontal direction and also in the vertical direction, but in this example, as shown in Fig. 6A, the narrow width areas A, B and C of the warning area are formed in a plurality in a vertically slantwise direction from a side adjacent the sensor towards a side distant therefrom such that, when adjustment is carried out to bring the narrow width areas A, B and C as a whole (warning area W) to a location close to the wall surface of the wall K, the variable shutter 35B and the position setting rig 45 can be engaged with each other to block an arbitrarily narrow width area.

When the main unit 3A is inclined downwardly to bring the warning area W close to the device, as shown in Fig. 6B, since the narrow width area A is close to the sensor mounting surface (wall surface of the wall K), it is affected by, for example, the change in temperature of the device mounting surface, resulting in an increased risk of erroneous operation. Accordingly, as shown in Fig. 6C, the variable shutter 35B is activated to block (shield) the lens a to thereby eliminate the narrow width area A that is close to the device mounting surface, so that the adjustment to bring the warning area W to the side adjacent the device and the reduction of the risk of the erroneous operation are concurrently accomplished.

Figs. 7A to 7C illustrate a further modification. In each of the foregoing examples, the warning area W has been shown and described as adjusted to a wide region and a narrow region while the variable shutter 35 be disposed in the boundary of each segmentalized lens 39. However, in this example, the position of the variable shutter is somewhat changed to adjust the surface area for concealing a portion of the segmentalized lens 39 forming each narrow width area to thereby shield a portion of the optical path of the narrow width area of the warning area W so that a portion of the warning area W can be adjusted in sensitivity.

As shown in Fig. 7A, owning to the variable shutter 35 a region encompassed by the lenses d to k out from the lenses a to n is rendered to be an effective region and, in such case, those lenses d to k have its detection sensitivity set to the maximum value. In contrast thereto, as shown in Fig. 7B, with the main unit 3A having been pivoted, a region encompassed by the lenses g to n is rendered to be the effective region and only the lens g is rendered by the variable shutter to have the effective surface area of the lens that is, for example, 1/2. In other words, the detection sensitivity of the narrow width area G is 1/2 of that of the wide area. The narrow width areas H to N against the lenses h to n have its detection sensitivity set to the maximum value. Thus, without changing the number of the narrow width areas, the sensitivity of the particular narrow width area can be adjusted.

Also, as shown in Fig. 7C, when with respect to the narrow width areas spreading in the vertical direction, the variable shutter 35B blocks a portion of the narrow width area A in the vertical direction, it is possible to render the detection sensitivity of the narrow width area A to be, for example, 1/2. In this case, the detection sensitivity of the narrow width area (the area adjacent the wall K), which forms a factor of the erroneous operation, can be adjusted to a low value.

As discussed above, since the present invention is so designed and so configured that since the area adjusting unit optically adjusts the optical path forming the narrow width area of the warning area so that the position setting unit can engage the area adjusting unit to control its position and, therefore, in dependence on the condition of the warning area, of which direction has been changed, such warning area can be easily and automatically set to a desired area and, hence, the securement of the detection performance and the prevention of the erroneous operation can be concurrently accomplished.

Although the present invention has been fully described in connection with the preferred embodiments thereof and its modifications with reference to the accompanying drawings which are used only for the purpose of illustration, those skilled in the art will readily conceive numerous changes and modifications which do not fall within the scope of the appended claims.

For example, the optical section has been shown and described as provided with the variable shutter with the position setting rib provided in the covering, the optical section may be provided with the position setting rib in which case the variable shutter is provided in the covering.

Also, although reference has been made to the passive infrared ray sensor employed by the intrusion detection device, the present invention may not be necessarily limited thereto and the active infrared ray sensor may be equally employed in the intrusion detection device.

### [Reference Numerals]

- 1 ····: Intrusion detection device
- 3 ····: Optical section
- 3A ····: Main unit
- 4 ····: Unit holder
- 15 ····: Angle retention part
- 30 ····: PIR sensor (Detecting element)
- 35 ····: Area adjusting unit (Variable shutter)
- 35a ····: Shutter piece
- 35b ····: Extension piece
- 39 ····: Light collecting section (lens)
- 40 ····: Lens equipped covering
- 45 ····: Position setting unit (Position setting rib)
- W ····: Warning area
- A to N ····: Narrow width area

## Claims

1. An intrusion detection device to detect an intrusion of an object within a warning area, which warning area is variable in a direction and which intrusion detection device is formed by an optical section, including a detecting element, and a light collecting section, the device comprising:
an area adjusting unit provided in one of the optical section and the light collecting section to optically adjust an optical path between the optical and light collecting sections; and
a position setting unit provided in the other of the optical section and the light collecting section to define a position of the area adjusting unit when the position setting unit is engaged with the area adjusting unit;
wherein the warning area has a plurality of narrow width areas and the area adjusting unit optically adjusts the optical path which forms the respective narrow width area;
the area adjusting unit is a variable shutter to optically block the optical path forming at least one of the narrow width areas and the position setting unit is a position setting rib to perform a position setting when the position setting unit is engaged with the variable shutter;
the optical section comprises a main unit, having the detecting element, and a unit holder to pivotally support the main unit, the variable shutter being mounted on the main unit;
the light collecting section comprises an array of segmentalized lenses formed in a covering which covers the main unit, the position setting rib being mounted on the covering; and
the main unit and the covering being configured such that, when the main unit is set at a predetermined pivot position and, when the covering is fitted to the main unit, it engages the position setting rib, which is mounted on the covering, to set the position of the variable shutter.

2. The intrusion detection device as claimed in claim 1, in which the position setting rib includes a plurality of grooves juxtaposed in a direction conforming to the direction of pivot of the main unit, each of the groove having a different shape effective to retain a shutter position in correspondence with the position of pivot, and the variable shutter is of a generally L-shaped configuration including a shutter piece to block the optical path, formed by the narrow width areas, and an extension piece partially extending from the shutter piece, the extension piece being engaged in the groove of the position setting rib to define the position thereof.

3. The intrusion detection device as claimed in claim 1, in which, so that a desired area region may be formed in correspondence with the setting of the angle of pivot of the optical section, it includes an area configuration in which an area in a direction forwardly with respect to a device front surface is offset leftwards and rightwards by arrangement of the plurality of the lenses.

4. The intrusion detection device as claimed in claim 1, in which the variable shutter is made of a deformable material, the angle of opening of the variable shutter being varied by the interference with the position setting rib having a predetermined rugged shape such that, in dependence on the angle of pivot of the optical section, it is set to a wide area having a large number of the narrow width areas or a narrow area having a small number thereof.

5. The intrusion detection device as claimed in claim 1, in which the narrow width areas of the warning area are formed in a plurality of number from a side adjacent to a device to a distant side in a vertically slantwise direction, the variable shutter and the position setting rib being engaged with each other, when adjustment to bring the entire of the narrow width areas to the side adjacent the device is to be performed, to thereby block the optical path of at least one of the narrow width areas.

6. The intrusion detection device as claimed in claim 1, in which by means of the variable shutter, a portion of the warning area is adjusted in sensitivity by blocking a portion of the optical path, forming the narrow width area.

## Patentansprüche

1. Eindringungsdetektionsvorrichtung zum Detektieren des Eindringens eines Objekts in einen Alarmbereich, wobei der Alarmbereich in einer Richtung variabel ist und wobei die Eindringungsdetektionsvorrichtung durch einen optischen Abschnitt, der ein Detektierelement umfasst, und einen Lichtsammelabschnitt ausgebildet ist, wobei die Vorrichtung Folgendes umfasst:
eine Bereichsanpassungseinheit, die in einem aus dem optischen Abschnitt und dem Lichtsammelabschnitt bereitgestellt ist, um einen optischen Pfad zwischen dem optischen und dem Lichtsammelabschnitt anzupassen; und
eine Positionseinstellungseinheit, die in dem anderen aus dem optischen Abschnitt und dem Lichtsammelabschnitt bereitgestellt ist, um eine Position der Bereichsanpassungseinheit zu definieren, wenn die Positionseinstellungseinheit mit der Bereichsanpassungseinheit in Eingriff steht;
wobei der Alarmbereich eine Vielzahl von Bereichen mit geringer Breite aufweist und die Bereichsanpassungseinheit den optischen Pfad, der den jeweiligen Bereich mit geringer Breite bildet, optisch anpasst;
die Bereichsanpassungseinheit ein variabler Verschluss ist, um den optischen Pfad, der zumindest einen der Bereiche mit geringer Breite bildet, optisch zu blockieren, und die Positionseinstellungseinheit eine Positionseinstellungsrippe ist, um eine Positionseinstellung durchzuführen, wenn die Positionseinstellungseinheit mit dem variablen Verschluss in Eingriff steht;
der optische Abschnitt eine Haupteinheit, die das Detektierelement aufweist, und eine Einheithalterung zum schwenkbaren Stützen der Haupteinheit umfasst, wobei der variable Verschluss an der Haupteinheit angebracht ist;
der Lichtsammelabschnitt eine Anordnung von segmentalisierten Linsen umfasst, die in einer Abdeckung ausgebildet sind, die die Haupteinheit abdeckt, wobei die Positionseinstellungsrippe an der Abdeckung angebracht ist; und
die Haupteinheit und die Abdeckung so ausgebildet sind, dass sie, wenn die Haupteinheit auf eine vorbestimmte Schwenkposition eingestellt ist und wenn die Abdeckung an der Haupteinheit montiert ist, die Positionseinstellungsrippe, die an der Abdeckung angebracht ist, in Eingriff bringt, um die Position des variablen Verschlusses einzustellen.

2. Eindringungsdetektionsvorrichtung nach Anspruch 1, wobei die Positionseinstellungsrippe eine Vielzahl von Nuten umfasst, die in einer Richtung, die der Schwenkrichtung der Haupteinheit entspricht, nebeneinander angeordnet sind, wobei jede der Nuten eine andere Form aufweist, die wirksam ist, um eine Verschlussposition in Entsprechung mit der Schwenkposition rückzuhalten, und der variable Verschluss eine im Allgemeinen L-förmige Konfiguration aufweist, die ein Verschlussteil zum Blockieren des optischen Pfades, der durch die Bereiche mit geringer Breite gebildet ist, und ein Erstreckungsteil umfasst, das sich teilweise von dem Verschlussteil weg erstreckt, wobei das Erstreckungsteil mit der Nut der Positionseinstellungsrippe in Eingriff steht, um seine Position zu definieren.

3. Eindringungsdetektionsvorrichtung nach Anspruch 1, wobei diese, damit eine gewünschte Bereichsregion entsprechend der Einstellung des Schwenkwinkels des optischen Abschnitts gebildet werden kann, eine Bereichskonfiguration umfasst, in der ein Bereich in einer in Bezug auf eine Vorrichtungsvorderseite nach vorne liegenden Richtung durch Anordnung der Vielzahl von Linsen nach links und nach rechts versetzt ist.

4. Eindringungsdetektionsvorrichtung nach Anspruch 1, wobei der variable Verschluss aus einem verformbaren Material herstellt ist, wobei der Öffnungswinkel des variablen Verschlusses durch den Eingriff mit der Positionseinstellungsrippe variiert, die eine vorgegebene unebene Form aufweist, so dass sie in Abhängigkeit von dem Schwenkwinkel des optischen Bereichs auf einen breiten Bereich mit einer großen Anzahl der Bereiche mit geringer Breite oder einen schmalen Bereich mit einer geringen Anzahl davon eingestellt wird.

5. Eindringungsdetektionsvorrichtung nach Anspruch 1, wobei die Bereiche mit geringer Breite der Alarmbereiche in einer Vielzahl von Anzahlen von einer Seite, die benachbart zu einer Vorrichtung liegt, zu einer entfernten Seite in einer vertikal schrägen Richtung ausgebildet sind, wobei der variable Verschluss und die Positionseinstellungsrippe miteinander in Eingriff stehen, wenn eine Anpassung durchzuführen ist, um die Gesamtheit der Bereiche mit geringer Breite zu der Seite, die benachbart zu der Vorrichtung liegt, zu bringen, um dadurch den optischen Pfad zumindest eines der Bereiche mit geringer Breite zu blockieren.

6. Eindringungsdetektionsvorrichtung nach Anspruch 1, wobei durch den variablen Verschluss ein Teil des Alarmbereichs durch Blockieren eines Abschnitt des optischen Pfads, der den Bereich mit geringer Breite bildet, in Empfindlichkeit angepasst wird.

## Revendications

1. Dispositif de détection d'intrusion pour détecter une intrusion d'un objet dans une aire d'avertissement, laquelle aire d'avertissement est variable dans une direction et lequel dispositif de détection d'intrusion est formé par une section optique, comprenant un élément de détection, et une section de collecte de lumière, le dispositif comprenant :
une unité d'ajustement d'aire prévue dans l'une de la section optique et de la section de collecte de lumière pour ajuster optiquement un trajet optique entre les sections optique et de collecte de lumière ; et
une unité de réglage de position prévue dans l'autre de la section optique et de la section de collecte de lumière pour définir une position de l'unité d'ajustement d'aire lorsque l'unité de réglage de position est mise en prise avec l'unité d'ajustement d'aire ;
dans lequel l'aire d'avertissement présente une pluralité d'aires de largeur étroite et l'unité d'ajustement d'aire ajuste optiquement le trajet optique qui forme l'aire de largeur étroite respective ;
l'unité d'ajustement d'aire est un obturateur variable pour bloquer optiquement le trajet optique formant au moins une des aires de largeur étroite et l'unité de réglage de position est une nervure de réglage de position pour effectuer un réglage de position lorsque l'unité de réglage de position est mise en prise avec l'obturateur variable ;
la section optique comprend une unité principale, présentant l'élément de détection, et un support d'unité pour supporter de manière pivotante l'unité principale, l'obturateur variable étant monté sur l'unité principale ;
la section de collecte de lumière comprend un réseau de lentilles segmentées formées dans un recouvrement qui recouvre l'unité principale, la nervure de réglage de position étant montée sur le recouvrement ; et
l'unité principale et le recouvrement étant configurés de telle sorte que, lorsque l'unité principale est réglée à une position de pivotement prédéterminée et lorsque le recouvrement est ajusté à l'unité principale, il vient en prise dans la nervure de réglage de position, qui est montée sur le couvercle, pour régler la position de l'obturateur variable.

2. Dispositif de détection d'intrusion selon la revendication 1, dans lequel la nervure de réglage de position comprend une pluralité de rainures juxtaposées dans une direction se conformant à la direction de pivotement de l'unité principale, chacune des rainures présentant une forme différente efficace pour retenir une position d'obturateur en correspondance avec la position de pivotement, et l'obturateur variable a une configuration généralement en forme de L comprenant une pièce d'obturateur pour bloquer le trajet optique, formée par les aires de largeur étroite, et une pièce d'extension s'étendant partiellement à partir de la pièce d'obturateur, la pièce d'extension étant mise en prise dans la rainure de la nervure de réglage de position pour définir sa position.

3. Dispositif de détection d'intrusion selon la revendication 1, dans lequel, de sorte qu'une région d'aire souhaitée puisse être formée en correspondance avec le réglage de l'angle de pivotement de la section optique, il comprend une configuration d'aire dans laquelle une aire dans une direction vers l'avant par rapport à une surface avant de dispositif est décalée vers la gauche et vers la droite par l'agencement de la pluralité de lentilles.

4. Dispositif de détection d'intrusion selon la revendication 1, dans lequel l'obturateur variable est réalisé en un matériau déformable, l'angle d'ouverture de l'obturateur variable étant modifié par l'interférence avec la nervure de réglage de position présentant une forme robuste prédéterminée de sorte qu'en fonction de l'angle de pivotement de la section optique, il est réglé sur une aire large présentant un grand nombre des aires de largeur étroite ou une aire étroite présentant un petit nombre de celles-ci.

5. Dispositif de détection d'intrusion selon la revendication 1, dans lequel les aires de largeur étroite de l'aire d'avertissement sont formées en une pluralité de nombres à partir d'un côté adjacent à un dispositif vers un côté distant dans une direction inclinée verticalement, l'obturateur variable et la nervure de réglage de position étant mis en prise l'un avec l'autre, lorsqu'un ajustement pour amener la totalité des aire de largeur étroite vers le côté adjacent au dispositif doit être effectué, pour bloquer ainsi le trajet optique d'au moins l'une des aires de largeur étroite.

6. Dispositif de détection d'intrusion selon la revendication 1, dans lequel, au moyen de l'obturateur variable, une partie de l'aire d'avertissement est ajustée en sensibilité en bloquant une partie du trajet optique, en formant l'aire de largeur étroite.
